(19) Europäisches Patentamt / European Patent Office / Office européen des brevets

(11) **EP 1 289 797 B1**

(12) **EUROPÄISCHE PATENTSCHRIFT**

(45) Veröffentlichungstag und Bekanntmachung des Hinweises auf die Patenterteilung:
**17.01.2007 Patentblatt 2007/03**

(21) Anmeldenummer: **01947137.4**

(22) Anmeldetag: **12.05.2001**

(51) Int Cl.:
***B60Q 1/14*** *(2006.01)*

(86) Internationale Anmeldenummer:
**PCT/DE2001/001803**

(87) Internationale Veröffentlichungsnummer:
**WO 2001/092060 (06.12.2001 Gazette 2001/49)**

(54) **LICHTSENSORSYSTEM**

LIGHT SENSOR SYSTEM

SYSTEME CAPTEUR DE LUMIERE

(84) Benannte Vertragsstaaten:
**DE ES FR GB SE**

(30) Priorität: **27.05.2000 DE 10026491**

(43) Veröffentlichungstag der Anmeldung:
**12.03.2003 Patentblatt 2003/11**

(73) Patentinhaber: **ROBERT BOSCH GMBH
70442 Stuttgart (DE)**

(72) Erfinder: **FENWICK, Matt
Glen Waverley, VIC 3150 (AU)**

(56) Entgegenhaltungen:
**EP-A- 0 510 408          EP-A- 0 524 086
DE-A- 19 740 212          US-A- 4 465 370
US-A- 5 451 822**

## Beschreibung

Die Erfindung bezieht sich auf Lichtsensorsysteme im Allgemeinen. Insbesondere bezieht sich die Erfindung auf ein Lichtsensorsystem, das eine Kompensation für sich innerhalb des Systems ändernde Parameter bereitstellt.

In Fahrzeugen können Lichtsensoren zur Anwendung kommen, um automatisch die vorherrschende Umgebungshelligkeit eines Fahrzeugs zu erkennen. Während der Nachtstunden werden die Sensoren einen niedrigen Helligkeitspegel erkennen und werden an einen Controller in dem Fahrzeug das "Helligkeit-Niedrig"-Signal übermitteln, um das Fernlicht anzuschalten. Auf ähnliche Weise, falls die Sensoren einen Helligkeitspegel erkennen, der über einem gewissen Schwellenwert liegt, wird ein "Helligkeit-Hoch"-Signal von den Sensoren übermittelt, welches zum Abschalten des Fernlichts führt. Dies kann in relativ schneller Folge geschehen, falls z.B. das Fahrzeug in einen Tunnel hineinfährt und diesen wieder verlässt, oder falls eine dunkle Gewitterwolke während der Tageszeit über dem Fahrzeug hängt. Die Lichtsensoren stellen dabei eine vorteilhafte Einrichtung dar und erleichtern dem Fahrer die Arbeit dadurch, dass er das Fernlicht nicht an- und abzuschalten braucht.

Aus der US 4 465 370 A ist ein Lichtsensorsystem einschließlich erster und zweiter Fotodioden und Mitteln zum Messen der Ausgabe der Dioden bekannt. Das System schließt weiterhin einen Mikrocontroller mit ersten und zweiten Digitalausgaben ein, die mit den Dioden verbunden sind, wobei die Fotodioden einzeln angesteuert werden können, um eine Ausgabe an einen gemeinsamen Ausgabepunkt bereitzustellen.

Weiterhin zeigt die DE 197 40 212 A1 eine Sensoranordnung mit mehreren Fotodioden, die an einem Mikrocontroller gekoppelt sind. Um Störeinflüsse durch zum Beispiel Alterungsprozesse zu vermeiden, ist ein Regler zum Zwecke der Kompensation von Offsetsignalen vorgesehen.

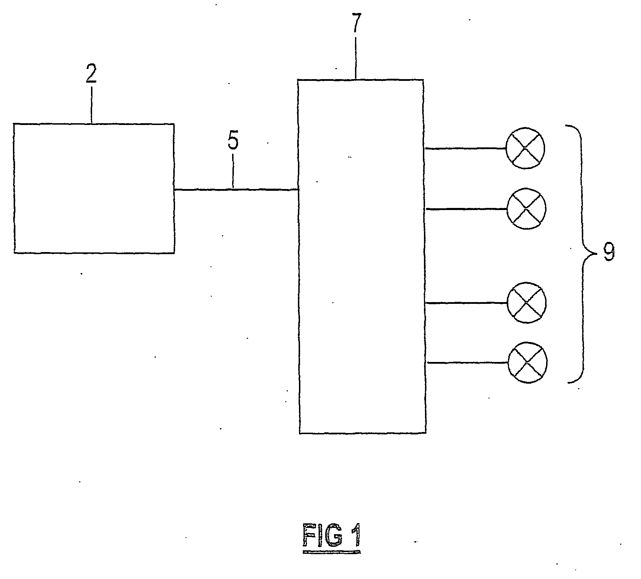

Figur 1 zeigt eine generelle Anordnung eines Lichtsensorsystems 2 in Verbindung mit einem Fahrzeugcomputer (body computer) 7 zum automatischen An- oder Abschalten der Fernlichter 9 eines Fahrzeugs. Das Sensorsystem 2 sendet ein Signal über die Verbindung 5 an den Fahrzeugcomputer 7, um anzuzeigen, ob die Umgebungshelligkeit für das Fahren ausreichend oder unzureichend ist. Diese Anordnung kann in dem erfindungsgemäßen System sowie gleicherweise in schon bekannten Systemen Anwendung finden.

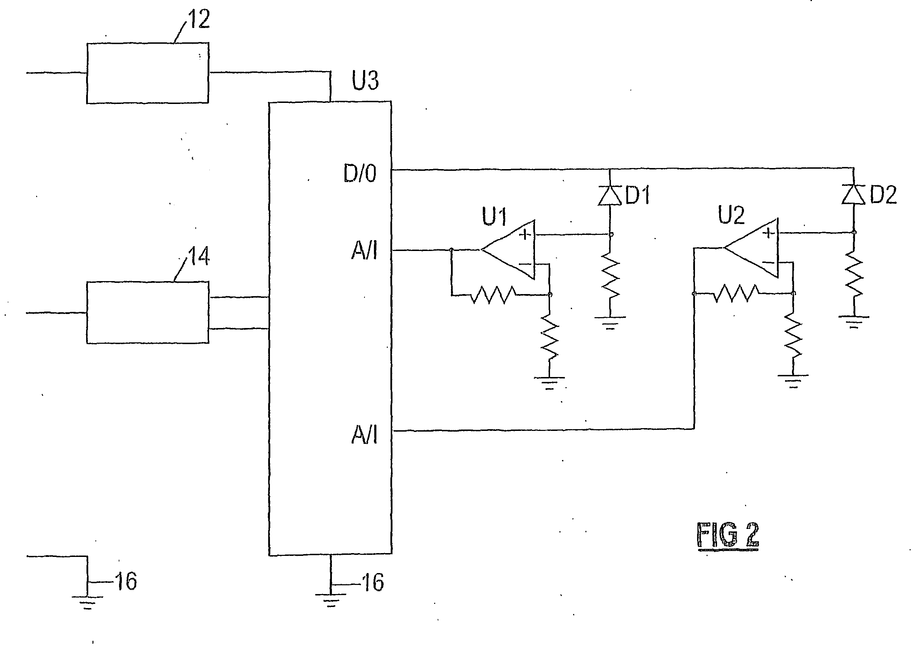

Figur 2 zeigt ein Lichtsensorsystem gemäß dem Stand der Technik, wobei das System einen Mikroprozessor U3 einschließt, welcher entsprechend ausgelegt ist, um die Ausgabe von den Fotodioden D1 und D2 über Operationsverstärker U1 bzw. U2 zu empfangen. Spannungspegel, die für die Ausgaben der Fotodioden D1 und D2 repräsentativ sind, werden in separaten Analogeingabekanälen A/I des Mikroprozessors U3 empfangen. Die Analogeingaben A/I werden mittels einer Analog-Digital-Umsetzereinrichtung 9 des Mikroprozessors U3 in Digitaleingaben konvertiert, woraufhin sie gemessen und entsprechende Ausgaben über eine serielle Schnittstelle 14 an den Fahrzeugcomputer 7 übermittelt werden. Der Mikroprozessor U3 empfängt eine Spannungszufuhr von dem Spannungsregler 12 und wird durch einen Erdungsleiter 16 geerdet. Das Sensorsystem gemäß Figur 2 bietet keine Kompensation für sich ändernde Parameter innerhalb des Systems, zum Beispiel infolge thermischer oder anderer Umwelteinflüsse.

Die vorliegende Erfindung betrifft ein Lichtsensorsystem einschließlich erster und zweiter Fotodioden sowie Mitteln zum Messen der Ausgabe der ersten oder zweiten Fotodioden, welche den Helligkeitspegel einer örtlichen Umgebung anzeigen; wobei das Lichtsensorsystem Mittel zum Kalibrieren der Ausgabe der ersten oder zweiten Fotodioden aufweist, um Parameterschwankungen des Lichtsensorsystems auszugleichen, wobei das Lichtsensorsystem einen Mikrocontroller einschließt mit ersten und zweiten Digitalausgaben, die mit den ersten bzw. zweiten Fotodioden verbunden sind, und wobei entweder die erste oder die zweite Fotodiode von den entsprechenden ersten und zweiten Digitalausgaben angesteuert werden kann, um eine Ausgabe an einen gemeinsamen Ausgabepunkt bereitzustellen. Weiterhin schließen die Mittel zum Kalibrieren einen Abgleichwiderstand ein, welcher zwischen einer dritten Digitalausgabe des Mikrocontrollers und dem gemeinsamen Ausgabepunkt geschaltet ist.

Bevorzugterweise liegt der Widerstand des Abgleichwiderstands präzise innerhalb 1 % des Nennwiderstandswertes. Bevorzugterweise umfasst der Mikrocontroller eine Digitaleinganbe, die mit dem gemeinsamen Ausgabepunkt verbunden ist, um eine gemessene Ausgabe zu empfangen. Bevorzugterweise schließen die Mittel zum Messen einen mit dem gemeinsamen Ausgabepunkt verbundenen geerdeten Kondensator ein.

Zweckmäßigerweise stellt das System Kompensation für sich ändernde Parameter innerhalb des Systems bereit, wie z.B. langsame Änderungen in der Schwellenspannung zur Ermittlung des Helligkeitspegels, der Zeitgeberfrequenz des Mikrocontrollers und der Speisespannung des Systems beispielsweise infolge von Temperatureinflüssen, Alterung der Systembestandteile und anderen umweltbedingten Auswirkungen auf das System.

Zweckmäßigerweise kann das System eine reduzierte Schaltungskomplexität und infolgedessen Kostenreduzierung im Vergleich zu Einrichtungen gemäß dem Stand der Technik (mit Bezug auf Fig. 2 beschrieben) bereitstellen, da in diesem System die Operationsverstärker oder Analog-Digital-Umsetzer nicht zur Anwendung kommen. Zum Beispiel lassen sich ungefähr 20 % pro Einheit durch Verzicht auf die Operationsverstärker und 10 % pro Einheit durch Verwendung eines Mikrocontrollers ohne die (kostspieligeren) Analog-Digital-Umsetzereinrichtungen einsparen.

Die Erfindung wird nun anhand von bevorzugten Ausführungsbeispielen unter Bezugnahme auf beiliegende Zeichnungen beschrieben:

Figur 1 ist ein Blockdiagramm eines Universal-Lichtsensorsystems für Automobil-Anwendungen.

Figur 2 zeigt ein Lichtsensorsystem gemäß dem Stand der Technik;

Figur 3 zeigt ein Lichtsensorsystem gemäß einer Ausführung der Erfindung;

Figur 4 ist ein Diagramm, welches die an der Eingabeanscblußstelle des Mikrocontrollers gemäß Figur 3 gemessene Spannung zeigt;

Figur 5 zeigt ein Lichtsensorsystem gemäß einer weiteren Ausführung der Erfindung;

Figur 6 zeigt des weiteren ein Detail des in den Figuren 3 und 5 gezeigten Mikrocontrollers; und

Figur 7 ist ein Diagramm, welches die Übertragungsfunktion des I/O Bauelementes des Mikrocontrollers zeigt.

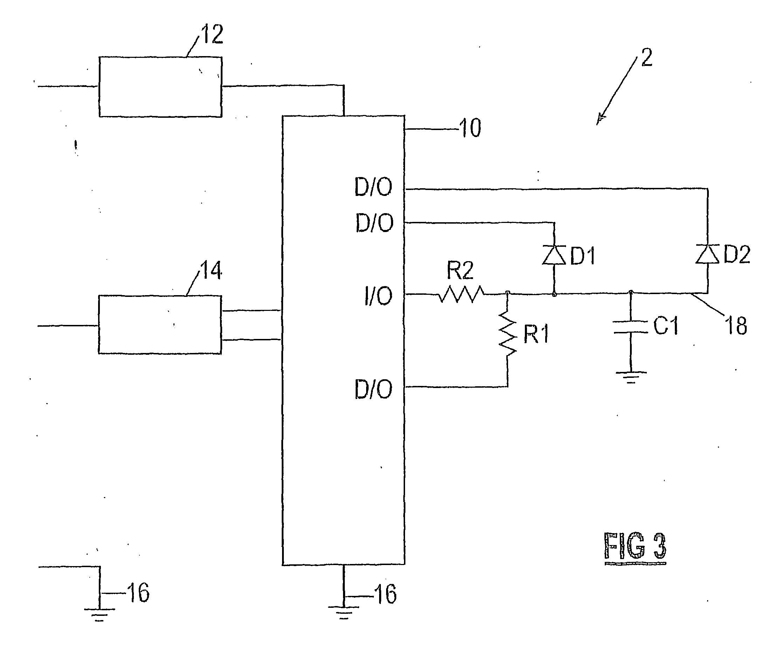

In der erfindungsgemäßen Ausführung gemäß Figur 3 wird ein Mikrocontroller 10, der sich von dem im Stand der Technik-System verwendeten Mikroprocessor U 3 unterscheidet, mit den Fotodioden D1 und D2 durch Digitalausgaben (D/O) verbunden. Ein Kondensator C1 ist mit dem gemeinsamen Ausgabepunkt 18 der Fotodioden D1 und D2 verbunden und wird mit der Ausgabe einer beliebigen der Fotodioden aufgeladen. Die Aufladung des Kondensators C1 wird über den Widerstand R2 an einer Digitaleingabe (I/O) des Mikrocontrollers 10 gemessen, um zu ermitteln, ob der Spannungspegel an der Ausgabe der Fotodioden D1 und D2 die Schwellenspannung $V_{th}$ erreicht hat. Der Widerstand R2 hat die Funktion, den Stromfluß in den Mikrocontroller 10 während der Entladung des Kondensators C1 zu beschränken. Eine weitere Digitalausgabe des Mikrocontrollers 10 ist mit dem Ausgabepunkt 18 Fotodioden D1 und D2 über den Widerstand R1 verbunden. Der Widerstand R1 ist ein qualitativ erstklassiges Widerstandelement, dessen Widerstand bevorzugterweise innerhalb von 1 % seines vorgegebenen Nennwertes bekannt ist (verglichen mit 5 % für die meisten Anwendungen im Automobilbereich) zur effektiven-Kalibrierung der von den Fotodioden D1 und D2 empfangenen Ausgaben und der Entladungsausgabe des Kondensators C1. Ähnlich dem Sensorsystem gemäß Figur 2 ist der Mikrocontroller 10 mit dem Erdungsleiter 16 verbunden, empfängt seine Speisespannung von dem Spannungsregler 12 und sendet seine Ausgangssignale an den Fahrzeugcomputer 7 über die serielle Schnittstelle 14.

Fotodioden D1 und D2 werden im allgemeinen verwendet, um Licht von verschiedenen Richtungen zu empfangen. Zum Beispiel kann D1 zum Himmel gerichtet sein, während D2 nach vorn in den Bereich vor dem Fahrzeug gerichtet ist. Zusätzliche Fotodioden können zu dem Sensorsystem 2 hinzugefügt werden, um Licht aus zusätzlichen Richtungen zu empfangen.

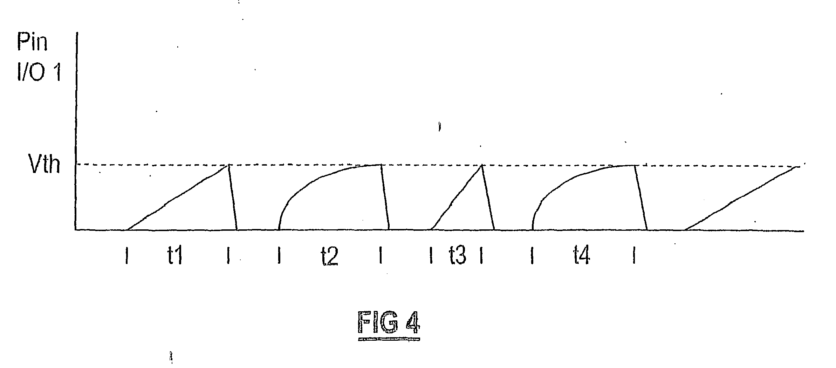

Es wird jetzt auf Figuren 3 und 4 gemeinsam Bezug genommen. Das Sensorsystem bedient sich einer besonderen Reihenfolge von Stufen, um die Ausgabe der Fotodioden D1 und D2 zu kalibrieren. Zuerst wird die Fotodiode D1 mit einer hohen Ausgabe der verbundenen Digitalausgabe angesteuert, wodurch der Kondensator C1 aufgeladen wird. Die zum Aufladen des Kondensators C1 bis zu der Schwellenspannung $V_{th}$ in Anspruch genommene Zeit t1 wird an der Digitaleingabe gemessen. Die Fotodiode D 1 wird abgewählt (deselected) und der Kondensator C1 wird dann durch die Digitaleingabe über den Widerstand R2 entladen. Die Digitaleingabe mißt dann die zur Aufladung des Kondensators C1 bis zu $V_{th}$ über den Widerstand R1 in Anspruch genommene Zeit, t2. Der Kondensator C1 wird dann wieder durch den Widerstand R2 entladen und die Fotodiode D2 wird dann angesteuert. Der Mikrocontroller 10 mißt dann an der Digitaleingabe die zur Aufladung des Kondensators C1 bis zu $V_{th}$ durch die Fotodiode D2 in Anspruch genommene Zeit t3. D2 wird abgewählt und der Kondensator C1 wird wieder entladen und die zur Aufladung des Kondensators C1 bis zu $V_{th}$ durch R1 in Anspruch genommene Zeit t4 wird gemessen. Die erforderliche Gesamtzeit, um die Zeitperioden t1 bis t4 plus der erforderlichen Zeit zur Durchführung der Kalibrierkalkulationen (unten angegeben) zu messen, ist die Kalibrierzykluszeit. Die Zeit t4 sollte ungefähr der Zeit t2 gleich sein und kann daher in manchen Fällen als überflüssig betrachtet werden, falls es wünschenswert ist, die Kalibrierzykluszeit zu reduzieren. Schätzungsweise ist die Kalibrierzykluszeit des Sensorsystems der bevorzugten Ausführung in der Größenordnung von 20 ms im Vergleich zu Schwankungen über ein paar Sekunden aufgrund anderer Einflüsse, wie z.B. thermischer Einflüsse.

Der Mikrocontroller 10 schließt eine Routine ein zur Normierung (Kalibrierung) der gemessen Zeiten t1 und t3 zur Beseitigung möglicher Einflüsse, wie z.B., langsame Änderungen in $V_{th}$, der Zeitgeberfrequenz und Vcc. Ein Beispiel eines Normierungsalgorithmus ist:

$$t3' = t3 \times 0{,}5 \times (t2 + t4) / t_{nom}$$

wobei $t_{nom}$ der erwartete Wert für die zur Aufladung des C 1 über R1 unter normalen Bedingungen erforderliche Zeit ist, und t3' der normierte Wert von t3 ist. Der normierte Wert von t1 wird ähnlich berechnet. Auf diese Weise werden die Auswirkungen von Temperatur, Alterung und Schwankungen in der Speisespannung ausgeglichen. Der Mikrocontroller 10 setzt die Zeiten t1' und t3' in die Ausgabevariablen I1 und I2 um (wobei sich I auf die Intensität des an den Fotodioden empfangenen Lichts bezieht) mit dem folgenden Verhältnis:

$$I1 = k/t1'$$

wobei k eine konstante Größe ist, die von dem gewünschten Ausgabebereich von I1 und I2 abhängig ist. Der Wert von k wird während Einsatzprüfungen auf dem Fahrzeug abgeleitet und unterscheidet sich nicht in Fahrzeugen desselben Fabrikats und Modells. Unterschiedliches Windschutzscheibenmaterial (z.B. getönt oder metallisiert) wird unterschiedliche k-Werte erfordern. Im allgemeinen hängt der gewählte k-Wert von folgenden Faktoren ab:

1. dem Wert des Kondensators C1;
2. der optischen Ausbeute von D1 und D2;
3. dem Blickfeld des Sensorsystems 2;
4. der Lichtintensität, die von Interesse ist (z.B. 1000 bis 2000 lux);
5. der Zerlegung der gemessenen Zeitperioden (z.B. ob die Zeit in $1\mu s$ Stufen, $2\mu s$ Stufen oder $10\mu s$ Stufen gemessen wird.
6. dem Bereich der Ausgabevariablen I1 und I2, welcher bevorzugterweise zwischen 0 und 1023 liegt.

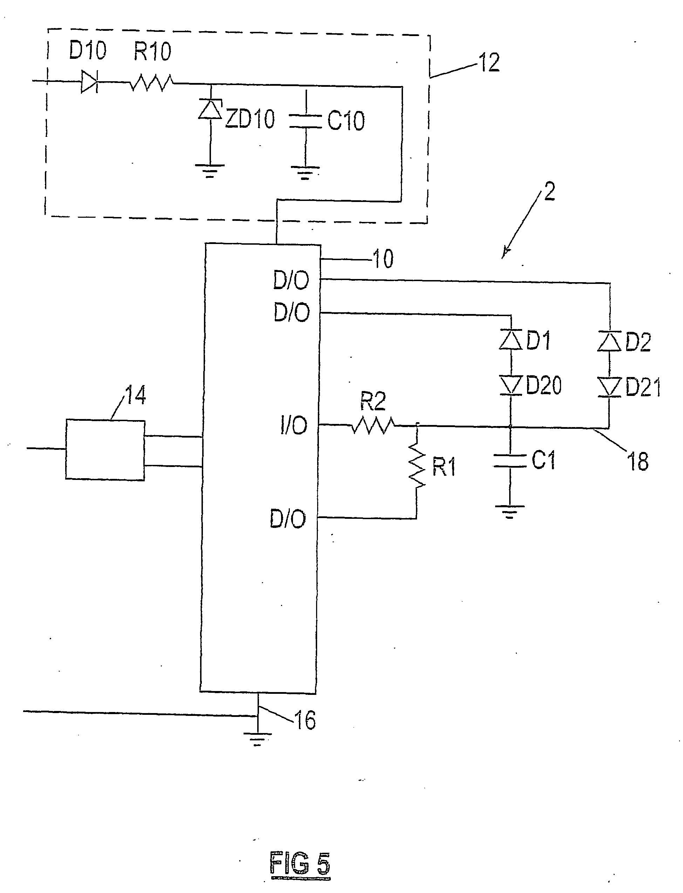

In Figur 5 wird eine weitere Ausführung der Erfindung gezeigt, worin das Sensorsystem 2 Dioden D20 und D21 in Serie mit Fotodioden D1 bzw. D2 einschließt. Die Funktion der Dioden D20 und D21 ist die, Irrtümer zu verhindern, die aufgrund von Kriechstrom auftreten, wenn entweder die eine oder die andere Fotodiode D1 oder D2 angesteuert wird. Falls die Ausgabe nach D1 hoch ist (z.B. 5 Volt) wird die Ausgabe nach D2 niedrig sein (z.B. 0 Volt) und Diode D21 dient zur Verhinderung der Ableitung von Kriechstrom zurück durch D 2. Ähnlicherweise verhindert Diode D20, daß Kriechstrom zurück durch Fotodiode D1 geleitet wird, wenn D2 angesteuert wird. Figur 5 zeigt eine Detailzeichnung des Spannungsreglers 12. Der Spannungsregler 12 ist eine normale Reglerschaltung mit einem Widerstand R10, einem Kondensator C10, einer Diode D10 und einer Z-Diode ZD10.

Der bevorzugte Mikrocontroller zur Verwendung in der vorliegenden Erfindung ist einer aus der Motorola 68HCO8GP-Serie. Die Mikrocontroller dieser Serie haben keine Analog-Digital-Umsetzeinrichtungen und sind daher preiswerter als Mikrocontroller die Analog-Digital-Umsetzung bieten. Im allgemeinen wird der gewünschte Mikrocontroller einen Speicher zur Speicherung kleiner Programme haben und zur Speicherung der Werte gewisser konstanter Größen, z.B. den Wert von k und $t_{nom}$.

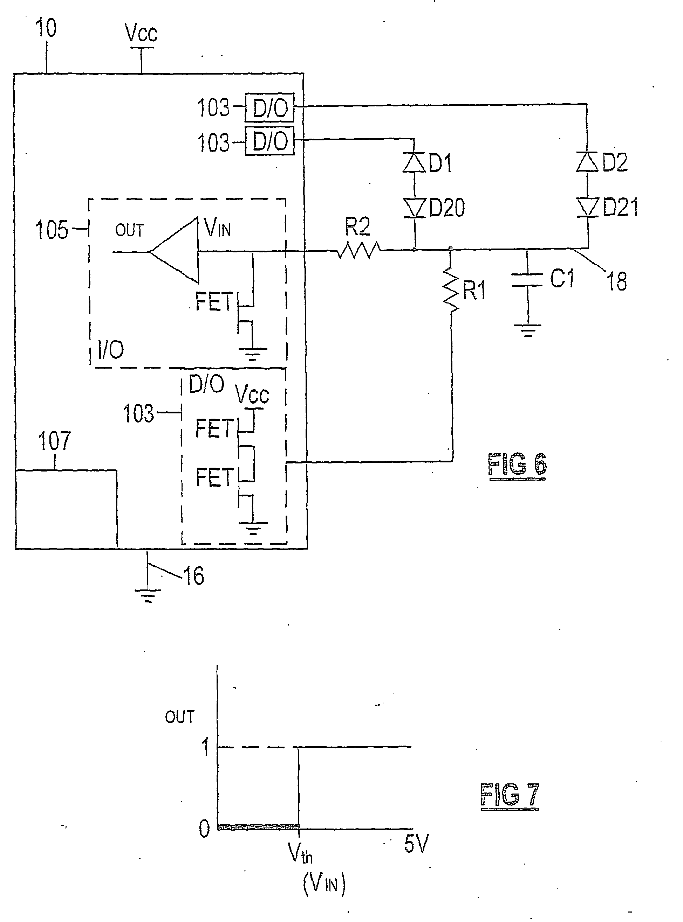

Figur 6 zeigt den Mikrocontroller 10 im Detail. Digitalausgaben (D/O) 103 werden hier gezeigt, die Werte an die Fotodioden D1 und D2 und den Widerstand R1 ausgeben. Eine Eingabe/ Ausgabeeinrichtung (I/O) 105 ist in dem Mikrocontroller 10 eingeschlossen (in Bezug auf Figur 3 als Digitaleingabe bezeichnet). I/O 105 ist dafür ausgelegt, die Spannung am Ausgabepunkt 18 zu messen, entsprechend den Ausgaben der Fotodioden D1 und D2, oder die Ausgabe durch den Widerstand R1. Durch die Verwendung eines Feldeffekttransistors (FET), welcher zwischen der Eingangsleitung und der Erde geschaltet ist, kann der I/0 105 den Kondensator C1 entladen. Der Mikrocontroller 10 umfaßt auch einen internen Oszillator 107 zur Bereitstellung des in dem Betrieb des Sensorsystems 2 verwendeten Zeitgebersignals. Jede Digitalausgabe 103 schließt zwei FETs ein, die so angeordnet sind, daß das Anschalten des ersten FET hohe Spannung an der Ausgabe liefert, während das Anschalten des zweiten FET niedrige Spannung an der Ausgabe bereitstellt. Die FETs werden zusammen in einer exklusiven OR (XOR - ODER) Funktion verwendet, so daß falls ein FET angeschaltet ist, der andere FET abgeschaltet ist. Zusätzlich dazu können beide FETs zusammen abgeschaltet werden, wodurch die Totalisolierung der mit der Ausgabe verbundenen externen Bauteile ermöglicht wird.

Figur 7 veranschaulicht eine einfache Übertragungsfunktionscharacteristik des I/O 105, welche, sobald die Eingangsspannung an I/O 105, $V_{in}$, die Schwellenspannung $V_{th}$ erreicht, ein "Hoch" Signal von dem I/O 105 ausgegeben wird. Diese "Hoch"-Ausgabe wird benutzt, um die Zeitperioden zu ermitteln, die in Anspruch genommen werden, bis der Ausgabepunkt 18 den Schwellenspannungspegel $V_{th}$ erreicht. Der Spannungsabfall über den Widerstand R2 zwischen dem Ausgabepunkt 18 und I/O 105 ist aufgrund der hohen Eingangssimpedanz des I/O 105 unbedeutend.

Die Parameter von R1, R2, D1, D2, D20, D21 und C1 werden im Laufe von Einsatzprüfungen im Fahrzeug abgeleitet und können daher von einem Einsatz zum anderen schwanken, während sie ihre erfindungswesentlichen Charakteristiken im Zusammenhang mit dem Bereich dieser Erfindung beibehalten.

Der Mikrocontroller 10 überträgt die Variablen I1 und I2 an den Fahrzeugcomputer 7 über Verbindungsstrecke 5. Die Verbindungsstrecke 5 ist bevorzugterweise eine serielle Zwei-Richtungs-Verbindung gemäß dem ISO9141 Standard. Das Verbindungsprotokoll ist bevorzugterweise gemäß dem LIN Standard (für Motorola Mikrocontroller verwendet).

Als Alternative kann die Verbindungsstrecke eine Ein-Richtungs-Verbindung sein, wobei der Wert von I1 und I2 durch ein Pulsbreitenmodulations-(PWM) Signal auf der Verbindung repräsentiert wird. In diesem Fall besteht die Verbindung aus zwei Leitern, einem für I1, und einem weiteren für I2. Als eine weitere Ausführung der Erfindung enthält die Software in dem Mikrocoritroller U1 einen Algorithmus, in der Art eines Schwellenwertvergleichs, zur Ermittlung des erforderlichen Beleuchtungszustands des Fahrzeugs; und die Anforderung zum An- oder Abschalten der Fahrzeugbeleuchtung wird über die Verbindung übermittelt. Dies würde die Entscheidungsfunktionen des Fahrzeugcomputers 7 entsprechend reduzieren und ermöglicht die Konfiguration des Sensorsystems 2, in welcher es tatsächlich von dem Fahrzeugcomputer 7 unabhängig ist.

**Patentansprüche**

1. Lichtsensorsystem (2) einschließlich erster und zweiter Fotodioden (D1, D2) sowie Mitteln zum Messen der Ausgabe der ersten oder zweiten Fotodioden (D1, D2), welche den Helligkeitspegel einer örtlichen Umgebung anzeigen; wobei das Lichtsensorsystem (2) Mittel zum Kalibrieren der Ausgabe der ersten oder zweiten Fotodioden (D1, D2) aufweist, um Parameterschwankungen des Lichtsensorsystems (2) auszugleichen, wobei das Lichtsensorsystem (2) einen Mikrocontroller (10) einschließt mit ersten und zweiten Digitalausgaben (D/O, 103), die mit den ersten bzw. zweiten Fotodioden (D1, D2) verbunden sind, und wobei entweder die erste oder die zweite Fotodiode (D1, D2) von den entsprechenden ersten und zweiten Digitalausgaben (D/O, 103) angesteuert werden kann, um eine Ausgabe an einen gemeinsamen Ausgabepunkt (18) bereitszustellen, **dadurch gekennzeichnet, dass** die Mittel zum Kalibrieren einen Abgleichwiderstand (R1) einschließen, welcher zwischen einer dritten Digitalausgabe (D/O, 103) des Mikrocontrollers (10) und dem gemeinsamen Ausgabepunkt (18) geschaltet ist.

2. Lichtsensorsystem (2) nach Anspruch 1, **dadurch gekennzeichnet, dass** der Widerstand des Abgleichwiderstands (R1) präzise innerhalb von 1 % des Nennwiderstandswertes liegt.

3. Lichtsensorsystem (2) nach Anspruch 1, **dadurch gekennzeichnet, dass** der Mikrocontroller (10) eine Digitaleingabe (I/O, 105) umfasst, die mit dem gemeinsamen Ausgabepunkt (18) verbunden ist, um eine gemessene Ausgabe zu empfangen.

4. Lichtsensorsystem (2) nach Anspruch 3, **dadurch gekennzeichnet, dass** die Mittel zum Messen einen mit dem gemeinsamen Ausgabepunkt (18) verbundenen geerdeten Kondensator (C1) einschließen.

5. Lichtsensorsystem (2) nach Anspruch 4, **dadurch gekennzeichnet, dass** jede der ersten und zweiten Fotodioden (D1, D2) in Serie mit entsprechenden ersten und zweiten Dioden (D20, D21) mit Gegenpolarität zu den ersten und zweiten Fotodioden (D1, D2) geschaltet ist, um einen Kriechstrom durch die ersten und zweiten Fotodioden (D1, D2) zu minimieren.

6. Lichtsensorsystem (2) nach Anspruch 4, **dadurch gekennzeichnet, dass** das Lichtsensorsystem (2) einen zweiten Widerstand (R2) beinhaltet, welcher zwischen dem gemeinsamen Ausgabepunkt (18) und der Digitaleingabe (I/O, 105) geschaltet ist.

7. Lichtsensorsystem (2) nach Anspruch 3, **dadurch gekennzeichnet, dass** die Digitaleingabe (I/O, 105) eine I/O-Anschlussstelle des Mikrocontrollers (10) ist, einschließlich Spannungsschwelle und Spannungs-Rückstellmitteln.

8. Lichtsensorsystem (2) nach Anspruch 1, **dadurch gekennzeichnet, dass** das Lichtsensorsystem (2) eine serielle Schnittstelle (14) zur Kommunikation zwischen dem Mikrocontroller (10) und einem Controller oder einem Regelkreis zum Schalten der Fernlichter eines Fahrzeugs aufweist.

9. Lichtsensorsystem (2) nach Anspruch 8, **dadurch gekennzeichnet, dass** die serielle Schnittstelle (14) das LIN-Kommunikationsprotokoll über eine serielle Zwei-Richtungs-Verbindung benutzt.

10. Lichtsensorsystem (2) nach Anspruch 8, **dadurch gekennzeichnet, dass** der Mikrocontroller (10) ausgelegt ist, eine Schwellwertentscheidung auszuführen und die Schwellwertentscheidung an den Controller oder Regelkreis zu übermitteln, die Fernlichter an- oder abzuschalten.

11. Lichtsensorsystem (2) nach Anspruch 8, **dadurch gekennzeichnet, dass** die serielle Schnittstelle (14) über eine Ein-Richtungs-Verbindung unter Verwendung eines Pulsbreitenmodulationssignals (PWM) auf einer Verbindung (5) kommuniziert.

12. Lichtsensorsystem (2) nach Anspruch 1, **dadurch gekennzeichnet, dass** die ersten und zweiten Fotodioden (D1, D2) dazu ausgelegt sind, Licht aus verschiedenen Richtungen oder bei unterschiedlichen Empfangswinkeln zu empfangen.

13. Lichtsensorsystem (2) nach Anspruch 1, **dadurch gekennzeichnet, dass** das Lichtsensorsystem (2) einen Spannungsregler (12) zur Regelung der Spannungszufuhr an den Mikrocontroller (10) aufweist.

14. Ein Fahrzeug mit einem Lichtsensorsystem (2) nach einem beliebigen der vorgenannten Ansprüche.

15. Verfahren zum Kalibrieren des Lichtsensorsystems (2) nach Anspruch 4, **gekennzeichnet durch** folgende Schritte:

    - Messen einer ersten Zeitperiode (t1) für die erste Fotodiode (D1) zur Aufladung des Kondensators (C1) bis zu einer Schwellenspannung

(V$_{th}$);
- erstmalige Entladung des Kondensators (C1);
- Messen einer zweiten Zeitperiode (t2) zur Aufladung des Kondensators (C1) bis zu der Schwellenspannung (V$_{th}$) **durch** den Abgleichwiderstand (R1);
- zweitmalige Entladung des Kondensators (C1);
- Messen einer dritten Zeitperiode (t3) zur Aufladung des Kondensators (C1) durch eine zweite Fotodiode (D2) bis zu der Schwellenspannung (V$_{th}$) und
- Berechnung eines Kompensationswertes für jede der ersten und zweiten Fotodioden (D1, D2) gestützt auf die erste, zweite und dritte Zeitperiode (t1, t2, t3) und eine erwartete Zeitperiode (t$_{nom}$).

16. Verfahren nach Anspruch 15, **dadurch gekennzeichnet, dass** das Verfahren des weiteren vor den Kalkulationsstufen die folgenden Stufen einschließt:

- drittmalige Entladung des Kondensators (C1); und
- Messen einer vierten Zeitperiode (t4) zur Aufladung des Kondensators (C1) bis zu der Schwellenspannung (V$_{th}$) durch den Abgleichwiderstand (R1), wobei die Kalkulationsstufe sich zusätzlich auf die vierte Zeitperiode (t4) stützt.

**Claims**

1. Light sensor system (2) including first and second photodiodes (D1, D2) and means for measuring the output of the first or second photodiodes (D1, D2) which indicate the brightness level of a local surrounding area; with the light sensor system (2) having means for calibrating the output of the first or second photodiodes (D1, D2) in order to balance parameter fluctuations of the light sensor system (2), with the light sensor system (2) including a microcontroller (10) with first and second digital outputs (D/O, 103) which are connected to the first and, respectively, second photodiodes (D1, D2), and it being possible for either the first or the second photodiode (D1, D2) to be actuated by the corresponding first and second digital outputs (D/O, 103) in order to provide an output at a common output point (18), **characterized in that** the calibrating means include a trimming resistor (R1) which is connected between a third digital output (D/O, 103) of the microcontroller (10) and the common output point (18).

2. Light sensor system (2) according to Claim 1, **characterized in that** the resistance of the trimming resistor (R1) is precisely within 1% of the nominal resistance value.

3. Light sensor system (2) according to Claim 1, **characterized in that** the microcontroller (10) comprises a digital input (I/O, 105) which is connected to the common output point (18) in order to receive a measured output.

4. Light sensor system (2) according to Claim 3, **characterized in that** the measuring means include an earthed capacitor (C1) which is connected to the common output point (18).

5. Light sensor system (2) according to Claim 4, **characterized in that** each of the first and second photodiodes (D1, D2) is connected in series to corresponding first and second diodes (D20, D21) having an opposite polarity to the first and second photodiodes (D1, D2), in order to minimize a creepage current through the first and second photodiodes (D1, D2).

6. Light sensor system (2) according to Claim 4, **characterized in that** the light sensor system (2) contains a second resistor (R2) which is connected between the common output point (18) and the digital input (I/O, 105).

7. Light sensor system (2) according to Claim 3, **characterized in that** the digital input (I/O, 105) is an I/O connection point of the microcontroller (10), including voltage threshold and voltage resetting means.

8. Light sensor system (2) according to Claim 1, **characterized in that** the light sensor system (2) has a serial interface (14) for communication between the microcontroller (10) and a controller or a control loop for switching the full beams of a vehicle.

9. Light sensor system (2) according to Claim 8, **characterized in that** the serial interface (14) uses the LIN communication protocol via a serial bidirectional link.

10. Light sensor system (2) according to Claim 8, **characterized in that** the microcontroller (10) is designed to make a threshold-value decision and to transmit the threshold-value decision to the controller or control loop to switch the full beams on or off.

11. Light sensor system (2) according to Claim 8, **characterized in that** the serial interface (14) communicates via a unidirectional link using a pulse-width modulation signal (PWM) on a link (5).

12. Light sensor system (2) according to Claim 1, **characterized in that** the first and second photodiodes (D1, D2) are designed to receive light from various directions or at different reception angles.

**13.** Light sensor system (2) according to Claim 1, **characterized in that** the light sensor system (2) has a voltage regulator (12) for regulating the voltage supply to the microcontroller (10).

**14.** Vehicle having a light sensor system (2) according to any one of the preceding claims.

**15.** Method for calibrating the light sensor system (2) according to Claim 4, **characterized by** the following steps:

- measuring a first time period (t1) for the first photodiode (D1) to charge the capacitor (C1) to a threshold voltage ($V_{th}$);
- discharging the capacitor (C1) for the first time;
- measuring a second time period (t2) for charging the capacitor (C1) to the threshold voltage ($V_{th}$) by the trimming resistor (R1) ;
- discharging the capacitor (C1) for the second time;
- measuring a third time period (t3) for charging the capacitor (C1) to the threshold voltage ($V_{th}$) by a second photodiode (D2); and
- calculating a compensation value for each of the first and second photodiodes (D1, D2) on the basis of the first, second and third time periods (t1, t2, t3) and an expected time period ($t_{nom}$).

**16.** Method according to Claim 15, **characterized in that** the method furthermore includes the following stages before the calculation stages:

- discharging the capacitor (C1) for the third time; and
- measuring a fourth time period (t4) for charging the capacitor (C1) to the threshold voltage ($V_{th}$) by the trimming resistor (R1), with the calculation stage additionally being based on the fourth time period (t4).

**Revendications**

**1.** Système capteur de lumière (2) comprenant une première et une deuxième photodiode (D1, D2) ainsi que des moyens de mesure de la sortie de la première et de la deuxième photodiode (D 1, D2) qui affichent le niveau de luminosité d'un environnement local, le système capteur de lumière (2) présentant des moyens de calibrage de la sortie de la première et de la deuxième photodiode (D1, D2) pour compenser des variations de paramètre du système capteur de lumière (2), ce dernier comprenant un micro-contrôleur (10) avec une première et une deuxième sortie numérique (D/O, 103) reliées à la première et à la deuxième photodiode (D1, D2) et soit la première soit la deuxième photodiode (D 1, D2) pouvant être commandée par la première et la deuxième sortie numérique correspondante (D/O, 103) pour préparer une sortie sur un point de sortie commun (18), **caractérisé en ce que** les moyens de calibrage comprennent une résistance de tarage (R1) commutée entre une troisième sortie numérique (D/O, 103) du microcontrôleur (10) et le point de sortie commun (18).

**2.** Système capteur de lumière (2) selon la revendication 1, **caractérisé en ce que** la résistance de la résistance de tarage (R1) se trouve précisément dans une plage de 1 % de la valeur de résistance nominale.

**3.** Système capteur de lumière (2) selon la revendication 1, **caractérisé en ce que** le micro-contrôleur (10) comprend une entrée numérique (I/O, 105) reliée au point de sortie commun (18) pour recevoir une sortie mesurée.

**4.** Système capteur de lumière (2) selon la revendication 3, **caractérisé en ce que** les moyens de mesure comprennent un condensateur (C1) mis à la terre et relié au point de sortie commun (18).

**5.** Système capteur de lumière (2) selon la revendication 4, **caractérisé en ce que** chacune des première et deuxième photodiodes (D1, D2) est montée en série avec la première et la deuxième diode (D20, D21) correspondante en contrepolarité avec la première et la deuxième photodiode (D1, D2) pour minimiser un courant de fuite superficielle traversant la première et la deuxième photodiode (D1, D2).

**6.** Système capteur de lumière (2) selon la revendication 4, **caractérisé en ce que** le système capteur de lumière (2) comprend une deuxième résistance (R2) commutée entre le point de sortie commun (18) et l'entrée numérique (I/O, 105).

**7.** Système capteur de lumière (2) selon la revendication 3, **caractérisé en ce que** l'entrée numérique (I/O, 105) est une prise de courant I/O du microcontrôleur (10), y compris le seuil de tension et les moyens de rappel de la tension.

**8.** Système capteur de lumière (2) selon la revendication 1,
**caractérisé en ce que**
le système capteur de lumière (2) présente une interface série (14) pour communiquer entre le micro-contrôleur (10) et un contrôleur ou un circuit de réglage pour commuter les phares longue portée d'un véhicule automobile.

**9.** Système capteur de lumière (2) selon la revendication 8,
**caractérisé en ce que**
l'interface série (14) utilise le protocole de communication LIN via une liaison série bidirectionnelle.

**10.** Système capteur de lumière (2) selon la revendication 8,
**caractérisé en ce que**
le micro-contrôleur (10) est conçu pour réaliser une décision de valeur seuil et pour la communiquer au contrôleur ou au circuit de réglage qui activent ou désactivent les phares longue portée.

**11.** Système capteur de lumière (2) selon la revendication 8,
**caractérisé en ce que**
l'interface série (14) communique sur une liaison (5) via une liaison unidirectionnelle à l'aide d'un signal de modulation d'impulsions en durée.

**12.** Système capteur de lumière (2) selon la revendication 1,
**caractérisé en ce que**
la première et la deuxième photodiode (D1, D2) sont conçues pour recevoir de la lumière émanant de différentes directions ou à des angles de réception variés.

**13.** Système capteur de lumière (2) selon la revendication 1,
**caractérisé en ce que**
le système capteur de lumière (2) présente un régulateur de tension (2) pour réguler l'alimentation en tension sur le microcontrôleur (10).

**14.** Véhicule doté d'un système capteur de lumière (2) suivant l'une quelconque des revendications précédentes.

**15.** Procédé de calibrage du système capteur de lumière (2) selon la revendication 4,
**caractérisé par**
les étapes suivantes consistant à :

- mesurer une première durée (t1) pour la première photodiode (D1) pour charger le condensateur (C1) jusqu'à une tension seuil ($V_{th}$) ;
- charger le condensateur (C1) une première fois ;
- mesurer une deuxième durée (t2) pour charger le condensateur (C1) jusqu'à la tension seuil ($V_{th}$) par la résistance de tarage (R1) ;
- charger le condensateur (C1) une deuxième fois ;
- mesurer une troisième durée (t3) pour charger le condensateur (C1) par une deuxième photodiode (D2) jusqu'à la tension seuil ($V_{th}$) et
- calculer une valeur de compensation pour chacune des première et deuxième photodiode (D1, D2) en s'appuyant sur la première, la deuxième et la troisième durée (t1, t2, t3) et une durée escomptée ($t_{nom}$).

**16.** Procédé selon la revendication 15,
**caractérisé en ce que**
le procédé comprend de plus les étapes suivantes avant les étapes de calcul :

- charger le condensateur (C1) une troisième fois, et
- mesurer une quatrième durée (t4) pour charger le condensateur (C1) jusqu'à la tension seuil ($V_{th}$) par la résistance de tarage (R1), l'étape de calcul s'appuyant de plus sur la quatrième durée (t4).

FIG 1

FIG 2

EP 1 289 797 B1

FIG 3

EP 1 289 797 B1

FIG 4

**FIG 5**

FIG 6

FIG 7